# EUROPEAN PATENT APPLICATION

(11) **EP 1 473 569 A1**
(43) Date of publication of application: **03.11.2004**
(21) Application number: 03729261.2
(22) Date of filing: 14.01.2003
(51) Int. Cl.: G01N 35/08, B01J 19/00

(54) **DEVICE USED FOR MULTIPLE EXPERIMENTAL TESTS ON SOLID MATERIALS AND A FLOW CONTROL SYSTEM**

(30) Priority: 14.01.2002 ES 200200131
(71) Applicant: CONSEJO SUPERIOR INVESTIGACIONES CIENTIFICAS (CSIC), 28006 Madrid (ES); UNIVERSIDAD POLITECNICA DE VALENCIA, 46022 Valencia (ES)
(72) Inventor: CORMA CANOS, Avelino Inst. Tecn. Quimica, E-46022 Valencia (ES); HERNANDEZ FENOLLOSA, Juan Inst. Tecnol. Quimica, E-46022 Valencia (ES); SERRA ALFARO, José Manuel Inst. Tecnologia Quimica, E-46022 Valencia (ES)
(74) Representative: Ungria Lopez, Javier
(86) International application number: PCT/ES2003/000013
(87) International publication number: WO 2003/058254

(57) **Abstract**

The present invention provides a system and method of experimental testing of multiple solid catalysts under controlled and measured conditions of temperature, flows and composition of supply fluid which permit the reliable comparison of catalytic activities between different catalytic materials, including under deactivation conditions of the catalyst, in turn permitting the carrying out of different chemical and/or physical processes or treatments on a plurality of solid materials. The present invention likewise provides a novel switching system for flows in an array of conduits, permitting control of the passage of the fluid through each of the conduits. Another particular feature of the invention is that it provides a system and a method of sample-taking and fast quantitative analysis making it possible to carry out continuous sequential analysis of the composition of the reaction products coming from each compartment of the reactor.

## Description

### TECHNICAL FIELD OF THE INVENTION

The present invention belongs to the technical field of chemical reactors, more specifically to chemical reactors for the conducting of tests related to procedures and catalysts in heterogeneous catalysis.

### BACKGROUND TO THE INVENTION

Advances in the chemical industry have to a large degree taken place thanks to the development of new catalytic processes. The key for the development of a catalytic process first of all lies in the availability of a catalyst that will permit the reaction or set of reactions to occur under more interesting conditions from the point of view of speed, economy, safety and versatility of the process. Nevertheless, the search for a specific catalyst is a costly task requiring the preparation of a large number of formulations, with- the consequent testing in a reaction system. This entire process entails very lengthy periods of time until a suitable catalyst manages to be developed. The current trend consists of cutting that time by means of using combinatory chemistry in the preparation stages and in the process of testing and selecting the catalysts. In general, this consists of the automated promotion of a combination of catalysts and a simultaneous testing of a series of them.

The most suitable way of conducting this type of catalytic test is under realistic reaction conditions including temperature, pressure, flows, hydrodynamic and diffusion conditions, composition of supplies, etc., similar to those conditions that would occur in the industrial chemical process.

So, patent US-A- 4099923 describes a catalytic test unit in which, in spite of the test being individual, the reactor permits several catalysts to be housed, which are automatically tested one after the other consecutively.

The German patent application DE-A-19809477 provides a reactor with different cavities where a range of catalysts are stored, permitting simultaneous testing though without achieving any kind of control or measurement over the flows circulating through each catalyst, nor over the different reaction temperatures. Also, said invention does not contribute any information on the supply system of the products, pressure regulation, nor on the sample-taking and later analysis, all of which are fundamental aspects when it comes to providing a suitable reactive system.

The patent application WO-A-99/64160 provides a system for the simultaneous testing of libraries of materials, which permits the common supply of a fluid to different recipients and a later sequenced analysis of the fluids exiting from each compartment. The flow of fluid passing through each recipient is controlled by flow restrictors or flow controllers. For the distribution of flows, both at the inlet and at the outlet of the reactor, different switching valves are used.

Moreover, the development of new techniques in combinatory chemistry (Senkan, S.M., Nature, vol. 394 pp. 350-353; Senkan, S.M. and Ozturk, S., Angewandte Chemie Int. Ed. 1999, 38, No 6, pp. 791-794; Cong, P. et al., Angewandte Chemie Int. Ed. 1999, 38, No 4, pp. 483-488; Senkan, S.M., Angewandte Chemie Int. Ed. 2001, No 40, pp. 312-329) have contributed innovative units and methods (US-A-5.959.297, US-A-6.004.617 and WO-A-99/21957) for the rapid and simultaneous testing of large libraries of catalysts, nevertheless, these inventions guarantee conditions that are only partly acceptable for the catalytic test, according to the criteria stated above, and which on the other hand are indeed guaranteed by the reaction system forming the object of the present invention.

### DESCRIPTION OF THE INVENTION

It is an objective of the present invention to contribute towards providing an automated system for carrying out methods permitting the development of catalytic activity tests on materials which could potentially be of interest for the catalysis of a defined chemical reaction or set of reactions, in such a way that the system permits the programmed development of catalytic activity tests on a broad number of materials in a sequential or simultaneous manner.

Another objective of the invention is to contribute towards providing a novel system of flow switching in an array of conduits, permitting control over the passage of fluid via each of the conduits, this system being of great importance for sampling.

Another objective of the invention is to contribute towards providing a reactor and its accessories, making the catalytic testing of multiple catalysts possible under controlled and measured conditions of temperature, flows and composition of supply fluid which permit the reliable comparison of catalytic activities among different materials, but also permitting the carrying out of different chemical and/or physical processes or treatments on a plurality of solid materials.

Another objective of the invention is to contribute towards providing a method for carrying out the different catalytic tests, in such a way that the maximum experimental data is achieved in the minimum time, at all times with a knowledge of the reaction conditions.

Another objective of the invention is to contribute towards providing a system and method of sample-taking and fast quantitative analysis, which makes it possible to have continuous sequential analysis of the composition of the reaction products coming from each compartment of the reactor.

It is also an objective of the invention is to contribute towards providing a reactor and its accessories that make it possible to conduct catalytic testing of multiple catalysts which can be affected by a deactivation with the time of use, in such a way that, by means of sequential testing with the system, it is possible to study catalysts with fast deactivation processes or transitory processes (induction processes) of the catalysts when they come into contact with different supplies, with the durations of those processes being of the order of seconds or minutes. The study of these fast processes is of great interest, since they can provide very significant information on the actual nature of the material and on catalytic activity, selectivity and stability towards a specific reaction. This type of fast sequential process is regarded as an important contribution by the invention with regard to current systems of catalytic testing.

Another objective of the invention is to contribute towards providing a system and a device that are useful for carrying out catalytic tests with a wide range of reagents or mixtures, which can be in both the gaseous and the liquid phase, under reaction conditions (temperature, contact time, hydrodynamic flow) comparable to those occurring in industrial processes. These aspects are regarded as very relevant since they permit a quick and reliable decision to be taken on the suitability of a material for the catalysis of a chemical process already at the industrial level.

It is yet another objective of the invention to provide a system which contributes towards making it possible to carry out catalytic tests on materials, consecutively or simultaneously, with individual fluid supplies for each reaction compartment.

In order to achieve the objectives stated above, the present invention provides a device for multiple catalytic tests of catalysts with a plurality of reaction chambers in at least one reaction block, where each reaction block is able to house at least one solid material, and has a fluid inlet conduit and a fluid outlet conduit, means of fluid supply (for effecting a regulated dosing of flows of at least one fluid via said fluid inlet conduit for each reaction chamber) and a system of switching of fluids consisting of a plurality of control systems, with each flow control system for the passage of fluids being applied to at least one access mouth selected from the access mouth of the inlet conduit and the access mouth of the outlet conduit of each reaction chamber, in which each flow control system comprises a flow control system for multiple tests of solid materials with a fluid flow switching system by means of a plurality of conduits, in which coupled in the access mouth of each conduit is the end of a rod, whose tip can have a conical shape, individually displaceable between a closed position and an open position, where, in the closed position, the contact between the end of the rod and the mouth of the conduit is such that the rod hermetically seals the passage of fluid to or from the conduit on which the rod is seated in the closed position.

Each rod can be connected to at least one actuator selected from mechanical, electromechanical, pneumatic, electric, magnetic, electromagnetic actuators and combinations thereof, the actuation of which displaces the rod between said closed position and said open position.

In another embodiment of the system, at least one surface selected from the surface of said end of the rod and the surface of the access mouth of the conduit in which the rod is seated in the closed position is configured in such a way that the displacement of the rod between the closed and open position permits the flow of fluid in the conduit to be regulated.

In one embodiment of the rod, it is hollow in order to permit the passage of fluids through its interior.

The incorporation of the flow control system of the present invention permits an innovative flow switching system to be introduced at the inlet or outlet of each of the reaction chambers of an experimental testing reactor, since it permits the quantity of reagent or reagents passing through each reaction chamber to be controlled and measured. This switching system is composed of a set of rods, preferably conical, whose tips are coupled to the inlets (or outlets) of the reaction chambers, with all these being located in the reaction block, and they hermetically seal the passage to fluids (gases or liquids). The seal likewise permits opening of the passage to fluids simply by means of displacing the rod or needle in the longitudinal direction. In this way, an array of rods is provided, with mechanical (electrical, pneumatic, magnetic, etc.) systems of actuation for their movement in the longitudinal direction, permitting the closure or the passage at will of the inlet or outlet fluid flow in each of the reaction chambers housed in the reaction block. An outstanding aspect of this system is its small size and the fact that the dead volumes of the system are very small, especially in the switching system, which differentiates it from previously available systems.

In an embodiment, the device comprises a common inlet for fluids to which the fluids provided by the supply means have access, and an inlet chamber inserted between the fluid inlet and the inlet conduits of the reaction chambers, and to where the access mouths of those inlet conduits lead.

In addition or alternatively, the device can also comprise a common outlet for fluids in order to discharge the fluids from the reaction chambers, and an outlet chamber inserted between the outlet conduits of the reaction chambers and said common outlet, and to where the access mouths of those inlet conduits lead.

The reaction chambers and the flow control means preferably withstand pressures from 0.1 absolute atmospheres to 100 absolute atmospheres, preferably between 1.0 and 5 absolute atmospheres.

The reaction block consists of one or several bodies of a material permitting operation between sub-ambient temperatures (-80°C) up to temperatures of 700°C and for which a material is preferred with high thermal conductivity, preferably bronze, aluminium or stainless steel, in which multiple reaction chambers or individual reactors are housed, preferably cylindrical in shape, where the different materials are housed for their catalytic testing or other type of physical and/or chemical treatment. The reaction chambers are dimensioned so that they can house the necessary quantity of catalyst for carrying out a test and, in this regard, it can be stated that quantities between 10 milligrams and 500 milligrams are usually sufficient. In this way, it is not necessary to have large quantities of material as usually occurs in conventional catalytic testing systems. These very small quantities of solid are of interest since they coincide with the quantities that can be processed by automatic parallel synthesis systems. In an embodiment of the invention, the reaction chambers are removable and individually housed in separate holes in the reaction block.

In order to adjust the desired reaction temperatures, the device preferably includes a first temperature regulation system capable of maintaining a temperature between -80°C and 700°C in each reaction block, and which comprises a plurality of first temperature sensors and at least one first heating element, and preferably also at least one temperature sensor in at least one of the reaction chambers.

This reaction block permits charging and discharging of the series of materials. Also, the block can be constructed in such a way that it can be easily removed and extracted, either in order to be exchanged for another reaction block or for effecting other processes on the solid materials contained in this reaction block in another facility or different device provided for that purpose. In an embodiment of the invention, the reaction block consists of at least two bodies thermally insulated from each other, and each body presents at least one reaction chamber. In this case, each body is endowed with at least one of the first temperature sensors and at least one of the first heating elements, while the first temperature regulation system is designed for individually regulating the temperature in each body of the reaction block, which permits series of individual reactors to be had at different temperatures.

Such a reaction block permits each reaction chamber to be filled with the desired catalyst automatically and even by means of robot.

The inlet and outlet for each reaction chamber is regulated by an automatic switching system, consisting of an array of needles or rods, and their respective seatings, along with actuation systems for their movement.

Each reaction chamber or individual reactor is supplied with a supply current consisting of one or more gases and/or one or more liquids, which are conditioned to the necessary temperature and state of aggregation prior to being introduced into said reaction chamber. In order to condition the supply, the device can be provided with a fluid conditioning system comprising conditioning means selected between means of mixing, means of heating, means of cooling, means of cooling, means of vaporization and combinations thereof, in order to condition the fluids prior to their being supplied to each reaction chamber, and a second temperature regulation system capable of maintaining a temperature between -80°C and 450°C in said conditioning system, and which comprises at least one second temperature sensor and at least one second heating element.

The gas or gases can be proportioned by a flow regulation system, such as calibrated holes or capillaries or also mass flow controllers based on variations in the temperature of the circulating fluid. In the case of using liquids, these are driven by a pump or they are pressurized and their flow is regulated by systems analogous to those described in the case of gases, or they are simply evaporated as far as saturation of the circulating gas. The liquids are then conditioned, in other words, they are preheated and, if necessary, vaporized and mixed with the gases. For this effect, the device has a preheater possessing a heating system with temperature measurement elements for thermal regulation.

After that, the conditioned current is made to flow through a reaction chamber housed in the reaction block which is at a defined temperature, where the catalytic reaction (test) or other modification process of the solid material to be investigated takes place. The material can be provided in the form of a bed of solid granules of different sizes or in the form of porous solid blocks.

The automatic switching system, consisting of an array of needles and their respective seatings, as well as the actuation system, permits a particular reaction chamber to be selected with the supply fluid being made to circulate through it only. In this way, the flow of the circulating fluid is known at all times during the test on the solid located in its interior.

The fluid coming from the selected reaction chamber which was in contact with a solid later on flows preferably to a common chamber for all the outlets of the reaction chambers housed in the reaction block. This common chamber, preferably of small volume, is connected to some analysis systems, in such a way that the reaction products collected in that chamber are led to those analysis systems, for example by means of a sample-taking system that leads outgoing fluid from the fluid outlet of each reaction chamber towards the means of analysis.

In this regard, the device can be provided with a third temperature regulation system arranged between the reaction block and the means of analysis at temperatures between 25°C and 250°C in any path of the fluid between the reaction block and the means of analysis, and which comprises at least a third temperature sensor and at least a third heating element.

A collection system can be inserted between the means of analysis and the fluids outlets from the reaction chamber in order to collect individual samples of the outgoing fluids from each reaction chamber. This collection system can comprise
a plurality of loops with calibrated volumes,
a fourth temperature regulation system with at least a fourth means of heating for maintaining the individual samples in the loops at a defined temperature until their later analysis has been performed,
a system of switching valves, such as for example individual inlet and outlet valves or one or more multi-gate valves for individually introducing, maintaining and emptying each individual sample in each loop, and
first connections for connecting each loop to the analysis system and second connections for connecting each loop to the sample-taking system.

In accordance with the invention, it is preferred for the analysis to be conducted by one or several of the following techniques: gas chromatography, mass spectrometry, visible spectrometry, ultraviolet spectrometry or infrared spectrometry. In one embodiment, the means of analysis consist of a system of ultra-fast gas chromatography, with a column of multiple capillaries in parallel or multi-capillary columns, which permit fast separation of the different chemical compounds making up the outgoing fluid from each reaction chamber.

For an automatic control and management of the device of the present invention, it can also be provided with a main control system for controlling at least part of the means and elements involved in the reactions and in the analysis of the reactions and with a computing system for managing and handling experimental data selected from at least temperatures, fluid flows, analytical results, reaction times and combinations thereof. So, the automatic control and management can preferably be effected by means of a PLC (programmable logic controller) electronic unit which in turn is linked to a PC compatible computer.

In the PLC are the PID control algorithms of temperature of the different heaters and it is in charge of transferring the different physical magnitudes present in the equipment to the computer as well handling the different actuators of that equipment.

From the computer the sequence of stages which have to be carried out in the catalytic test experiment is programmed and the allocated values for the different physical magnitudes of the system are selected: flows of liquids, flows of gases, positions of the different automatic valves, temperature of the reaction body, current state of the automatic switching system, etc.

The safety margins for each magnitude are also determined from the computer. In this way, if any of these are exceeded, different safety actions or procedures are triggered which, depending on the case, extend from a mere indication of the alarm situation as far as even the programmed shut-down of the process. This entire process is carried out by, for example, using SCADA software, which has easy interface with the user.

In accordance with what has been revealed above, the present invention provides a device capable of simultaneously conducting catalytic tests or tests on other properties (such as resistance/friction towards fluid flow, heat capacity, thermal conductivity, thermal degradability or resistance, chemical degradability or resistance to different fluids, etc.) on solid materials or any type of physical or chemical process, with fluid supplies. Also of importance is the prior conditioning stage of each individual supply current, with the possibility of using gases, liquids and mixtures thereof for this purpose being of interest. In this way, the device permits study both of the specific catalytic activity under certain fixed conditions and broader studies of chemical kinetics including deactivation, study in broad temperature ranges, regeneration; with the invention including different categories of experiment with any sequence of temperatures in the reactor, compositions of the fluid and flows of the supply fluid.

A preferred embodiment of the reaction device along the lines of the present invention is composed of:
- Recipients for gases and/or liquids.
- Flow measurement and regulation devices, both for gases and for liquids; and pumping and emptying devices if necessary.
- Conditioning heating device for the supply.
- Reaction block or blocks, with the different chambers where the catalytic materials are located.
- Temperature measurement elements, heating and thermal insulation elements, necessary for regulating the temperature in the reaction body and in those paths of the fluid where this is necessary in order to avoid cooling or condensation.
- Switching devices permitting the distribution of flows at the inlet and/or outlet of the reaction compartments, based on the use of a set or array of rods.
- Safety devices.
- Devices and accessories for connection among the other components.
- Chemical analysis systems for the products, such as might be gas chromatography, mass spectrometry, visible spectrometry, ultraviolet spectrometry or infrared spectrometry.
- Control and regulation system for the overall system.
- Data handling and management system.

The device of the invention can be furthermore be provided with an automated system for the collection of samples from each of the reaction chambers, with the system being able to comprise a mobile arm designed for selectively penetrating each of the reaction chambers, taking a direct sample of reaction products present in the reaction chambers and transferring the sample directly to the means of analysis.

The device described above permits sequential catalytic testing of a plurality of solids. In the event that it is wished to carry out a simultaneous testing process, the configuration of the system would have to be changed with the automatic switching system being located at the outlet of the reaction block and making the appropriate changes in the hydraulic configuration of the system.

A preferred manner for carrying out multiple catalytic testing that can be done with the device of the present invention is sequential testing of all the materials arranged in the reaction block in which the reaction conditions are identical in each of the individual reactors, in such a way that the exact flow circulating through each bed is known at any moment.

In this case, the operating process consists of making the supply current pass through each bed of solid consecutively. During each individual process, chemical analysis is carried out on the effluent fluid that has been in contact with the solid. During this process, the rest of the solids arranged in the reaction block are not in contact with any fluid current. Once the required analysis has been conducted, in other words, once the test with the solid in the selected chamber has been completed, the entrance to that reaction chamber is closed and an independent current of purge gas is passed, and then the passage is opened for the flow to the next reaction chamber, with this process being carried out successively until all the materials arranged in the reaction block have been tested. It can be highlighted that the system permits the control and measurement of the flow of the supply circulating through each reaction chamber since in this case the operation is sequential. In this way, it is possible to easily carry out variations in the flow circulating through the reaction chamber in comparison with, for example, systems based on flow restrictors.

During the course of the test on each of the materials, it is preferable that at the beginning the temperature, fluid composition and flow of fluid in contact with the solid should be the same for all solids to test, though there can also exist applications in which the variation of these three variables is of interest for each solid. Also, the global process described of testing all the solids can be repeated under the same conditions or varying one or more of the variables in a programmed way. One can therefore obtain a series of results of a set of solid catalysts at different temperatures, contact times and partial pressures.

Applications of interest for this sequential model that is described are the cases
(a) testing of catalysts with fast deactivations, of the order of seconds or minutes,
(b) testing of oxidation catalysts, in which it is wished to study the effect of the oxygen in the lattice without contributing oxygen (O₂) as oxidizing agent to the reaction gas, as might be the case of partial oxidation reactions of hydrocarbons.

With this system it is indeed possible to follow the evolution of the catalytic activity of a single solid during a short space of time, nevertheless, this type of study cannot be carried out in the case of parallel testing operations since, in spite of the fact that the reaction is carried out simultaneously in all the solids, the analysis generally continues to be conducted sequentially, with which it is not possible to follow the evolution of the process in short reaction times (TOS) for the majority of solids under test.

In the case of sequential operation, thanks to the switching system that is presented, it is possible to conduct tests with pules of reagents simply by adjusting the opening time of each reaction chamber, with this time being able to be of the order of milliseconds, even. This type of pulse process finds great application in the field of characterizing solid catalysts.

The device can in turn be used for the fast determination of the kinetics of a reaction with a single catalyst, with deactivation processes being included here, simply by using the same catalyst in different chambers of the reactor, and varying the contact time in each of them. In the event that the reaction block consists of various bodies, it would then be possible to have groups of reaction chambers at different temperatures, since each body has its own temperature regulation system.

During the test on a series of catalysts, it is possible to effect a programmed temporary modification to the reaction conditions: flow via each reaction chamber, composition of the supply, temperature of the supply, temperature of the material to study.

The invention also refers to a flow control system for multiple tests of solid materials with a switching system for fluid flows via a plurality of conduits, in which coupled at an access mouth of each conduit is the end of a rod, whose tip can have a conical shape, individually displaceable between a closed position and an open position, where, in the closed position, the contact between the end of the rod and the mouth of the conduit is such that the rod hermetically seals the passage of fluid to or from the conduit on which the rod is seated in the closed position. Each rod can be connected to at least one actuator selected from mechanical, electromechanical, pneumatic, electric, magnetic, electromagnetic actuators and combinations thereof, the actuation of which displaces the rod between said closed position and said open position.

In an embodiment of the system which permits the flow of the fluid in the conduit to be regulated, at least one surface selected from the surface of said tip of the rod and the surface of the access mouth of the conduit in which the rod is seated in the closed position is configured in such a way that the displacement of the rod between the closed and open position permits the flow of fluid in the conduit can be regulated.

In one embodiment of the rod, it is hollow in order to permit the passage of fluids through its interior.

The incorporation of the flow control system of the present invention permits an innovative flow switching system to be introduced at the inlet or outlet of each of the reaction chambers of an experimental testing reactor, since it permits the quantity of reagent or reagents passing through each reaction chamber to be controlled.

The flow switching system thus provides an array of rods, with mechanical (electrical, pneumatic, magnetic, etc.) systems of actuation for their movement in the longitudinal direction, permitting the closure or passage at will of the inlet or outlet fluid flow in each of the inlet conduits. As stated earlier, an outstanding aspect of this flow control system is that it provides a small size switching system with very small dead volumes of the system.

### BRIEF DESCRIPTION OF THE FIGURES

Described below are some embodiments of the invention on the basis of certain figures forming an integral part of the present specification and in which
Figure 1 is an exploded view of an embodiment of the catalytic testing device in accordance with the present invention, for sequential testing of thirty-six catalysts;

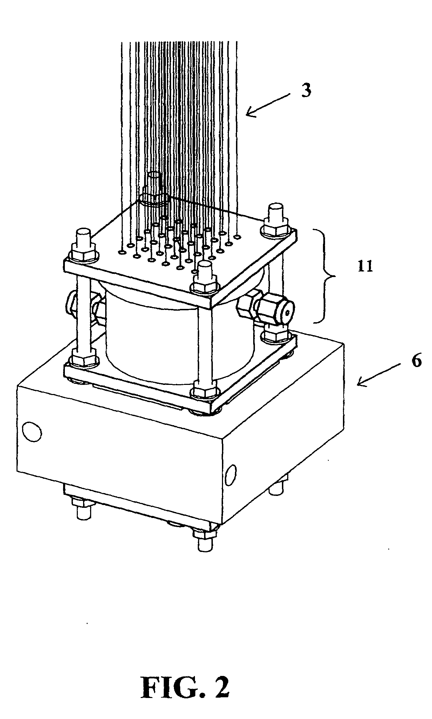

Figure 2 is an upper perspective view of the device shown in figure 1 in the assembled state;

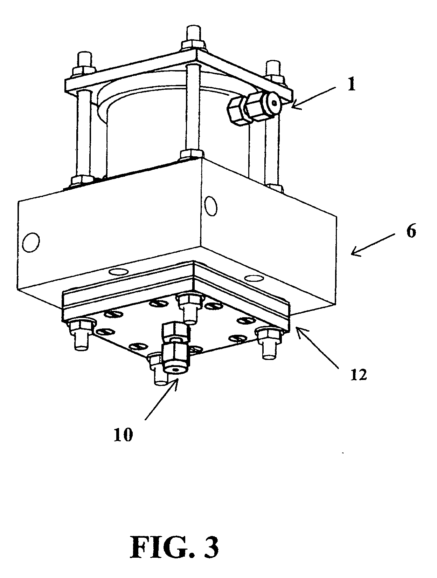

Figure 3 is a lower perspective view of the device shown in figure 2;
Figure 4 is a schematic view in cross-section of the device shown in figure 2 according to a first embodiment;
Figure 5 is a schematic view showing the elements comprising an embodiment of the invention which incorporates the device shown in the preceding figures, according to a first embodiment;
Figure 6 is a partial schematic view in cross-section of the device shown in figure 2 according to a second embodiment,
Figure 7 is a schematic view showing the elements comprising an embodiment of the invention which incorporates the device shown in the preceding figures, according to another embodiment;
Figure 8 is a partial schematic view in longitudinal cross-section of the reaction block according to a possible embodiment of the reaction chambers; and
Figure 9 is a view along the line of cut A-A' in figure 8.

Appearing in the figures are numerical references identifying the following elements:
- 1: Common input for supply to the device
- 2: Inlet conduits to the reaction chambers
- 3: Rods
- 4: Reaction chambers
- 4a: Removable reaction chamber
- 4b: Positioning tabs
- 5: Reaction block
- 5a: First body of the reaction block
- 5b: Second body of the reaction block
- 5c: Housing holes in the reaction block
- 5d: Securing projections
- 6: Heating device
- 7: Piece with outlets from the reaction chambers
- 8: Central gasket for the common chamber
- 9: Sealing piece for the common chamber
- 10: Common outlet of reaction products from the device
- 11: Set: switching system
- 12: Set: common chamber for collection of reaction fluids
- 13: Inlet chamber.
- 14: Common collection chamber
- 15: Outlet conduits from the reaction chambers
- 16: Access mouth to the reaction chamber
- 17: Actuators for the rods
- 18: Supply pump
- 19: Supply conduit
- 20: Means of analysis
- 21: First temperature sensor in the reaction chamber
- 21a: First sensor in the reaction chamber for reaction of the first body of the reaction block
- 21b: First sensor in the reaction chamber for reaction of the second body of the reaction block
- 22: Sample collection system
- 22a: First connections
- 22b: Second connections
- 23: First heating element
- 23a: First heating element of the first body of the reaction block
- 23b: First heating element of the second body of the reaction block
- 24: Conditioning system
- 24a: Second temperature sensor
- 24b: Second heating element
- 25: Third temperature regulation system
- 25a: Third temperature sensor
- 25b: Third heating element
- 26: Main control system
- 27: Computing system for management and handling of experimental data
- 28: Insulating element between the first body and the second body of the reaction block
- 29: Loops
- 30: Fourth temperature regulation system
- 30a: Fourth heating means
- 30b: Fourth temperature sensors
- 31: Switching valves in connection 22a
- 32: Switching valves in connection 22b
- 33: Supply reservoirs

### DESCRIPTION OF AN EMBODIMENT OF THE INVENTION

The figures show some embodiments of the device in accordance with the invention, valid for conducting tests with thirty-six types of solid catalyst placed in separate reaction chambers 4 housed in a reaction block 5, all of which are at the same temperature. The reaction block 5 consists of a single body, which is provided with a heating and thermal regulation system 6. Said body is manufactured in such a way that its interior contains cavities or reaction chambers 4 in each of which a solid in powder or granule form can be housed and through which a liquid, gas, gas/vapour mixture or gas/vapour/liquid mixture can be made to circulate.

The common supply for the plurality of reaction chambers 4 consists of a mixture of reagents which are proportioned by means of one or several flow controllers. For example, when a reagent is a liquid, this can be found in a saturator tempered by a cryostatic bath, through which the supply gas is made to bubble, thus obtaining a gas/vapour mixture whose molar ratio depends both on the temperature of the liquid and on the efficiency of the saturator, with the latter being dependent on the physical properties of the fluids, the flow of circulating gas, the actual geometry of the saturator, etc. Also, if preferred, the liquid could also be supplied by means of a supply pump.

The distribution of the supply fluid to the inlet of the reaction block is done by means of an automatic flow switching system 11. This system consists of a set of thirty-six conical steel rods 3, whose tips couple to the inlets to the thirty-six reaction chambers 4, all of them located in the reaction block 5, and, when activated, they permit the passage to be hermetically sealed to the gas/vapour mixture. The sealing likewise permits the passage to be opened to the fluid simply by displacing the rod or needle in the longitudinal direction. So, an array of thirty-six rods 3 is had, which can be actuated by means of mechanical actuation systems for their movement in the longitudinal direction, permitting the closure or opening at will of the passage for the inlet or outlet fluid flow in each of the reaction chambers 4 housed in the reaction block 5.

The outlet of the reaction system towards the analysis equipment can be heated, if necessary, in order to avoid condensation of vapours in conduits or valve bodies. In the same way, the connection section between the saturator and the reaction chambers 4 can be conveniently heated for the same reason.

The product samples can also be taken at the outlet from the reaction chamber 4 by means of a mobile arm (not shown in the figures) which partially penetrates into each of the thirty-six reaction chambers 4, taking a sample of the reaction products and transferring it to the analysis apparatus.

In the case presented in this example of embodiment, the volume of catalyst that it is possible to use in each reaction bed is up to fifty cubic millimetres.

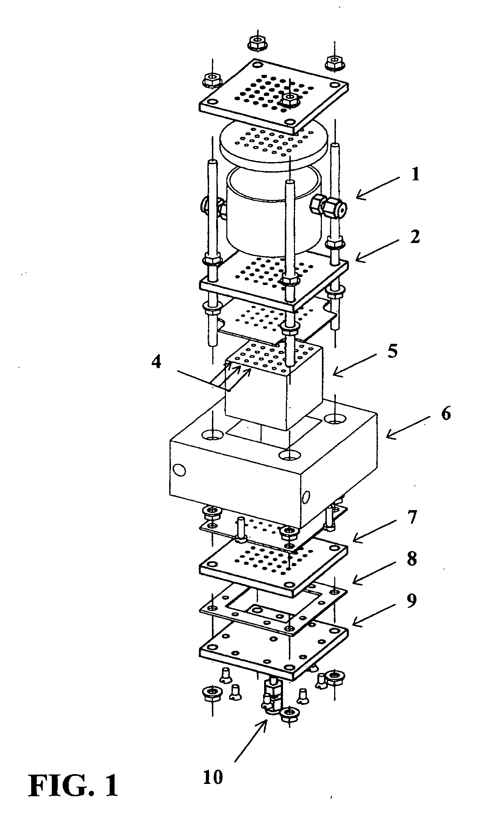

Figure 1 show an exploded view of the system displayed as an example. In this, it can be seen that the thirty-six outlets from the reaction block 5 are connected to a common chamber 12 of small volume. This chamber 12 is in turn connected to an analysis system, such as for example a mass spectrometer, permitting the continuous determination of the composition of effluent gases.

The different elements of the reactor are manufactured in stainless alloys, aluminium, teflon or other technical materials resistant to high temperatures

The temperature of the reaction block 5, where the materials to be catalytically assessed are housed, is reached using the common heating system 6 surrounding the entire block. Also, all the elements being heated are thermally insulated by means of elements of insulating ceramic materials.

All the elements of the present automatic device are controlled by a PLC (programmable logic controller) electronic unit which in turn is linked with a PC compatible computer.

In the PLC are the PID control algorithms for temperature of the different heating elements and it is in charge of transferring the different physical magnitudes present in the equipment to the computer as well as for handling the different actuators thereof.

From the computer, the sequence of stages which have to be carried out in the catalytic testing experiment are programmed along with the selection of the allocated values for the different physical magnitudes of the system: gas flows, temperatures of the preheaters, temperature of the reaction body, positions of the different actuators (valves), etc. Similarly, the computer program permits the management and handling of the experimental data, with the use of formats in the files and data compatible with standard software.

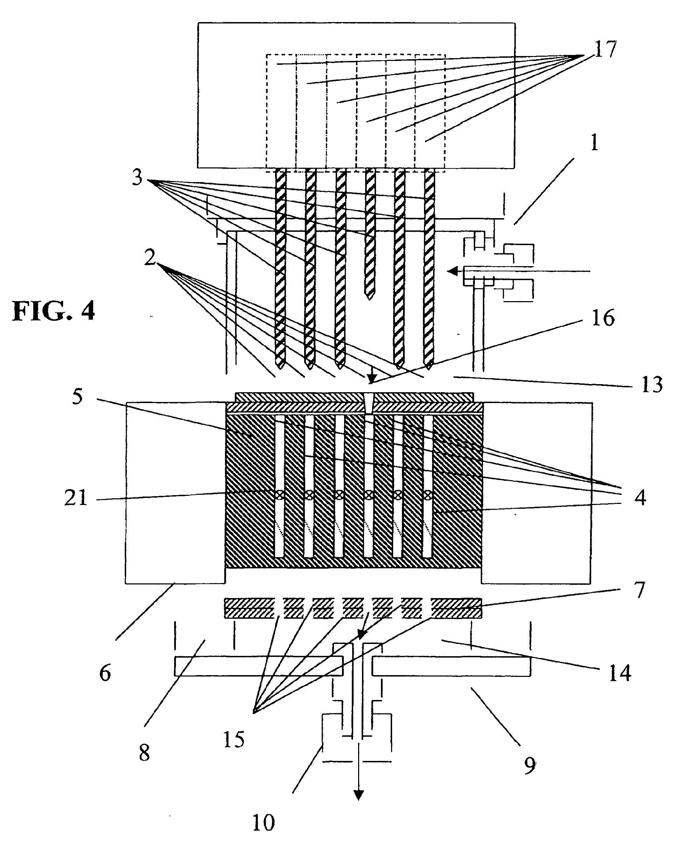

In accordance with what can be seen in figure 4, the rods 3 are connected to actuators 17 which individually and axially displace each of the rods between an open position, like the position that the third rod 3 from the left is in, and a closed position, like that which the other rods 3 are in. In the closed position, the tip of each of the rods 3 hermetically fits into the access mouth 16 of the inlet conduit 2 for each reaction chamber 4, inside which there is a first temperature sensor 21. In the position shown in figure 4, the fluid to analyse enters via the inlet 1 to the inlet chamber 13 and, via the access mouth 16 of the inlet conduit 2 with respect to which the rod 3 is in the withdrawn position, it penetrates into the reaction chamber 4 where the reaction takes place, as a result of which the reaction fluid leaves the reaction chamber via the outlet conduit 15 via which it reaches the common collection chamber 14. The reaction fluid then leaves the chamber 14 via the outlet 10 from where it is led to the means of analysis (not shown in figure 4).

The solid contained in a reaction chamber can be in powder form and, in order to secure it, it can have, at the end of the reaction chambers, means such as (i) sintered parts of a metallic, ceramic or polymer nature, or combinations thereof, (ii) fabrics of metallic, ceramic or polymer fibres or combinations thereof. Likewise, the solid can have been previously shaped in order to duly fit into the reaction chambers. In the case of the embodiment of the invention shown in figure 4, the solids contained in the reaction chambers have been previously shaped into the form of a cylinder and have a porous nature in order to permit the passage of fluid through them.

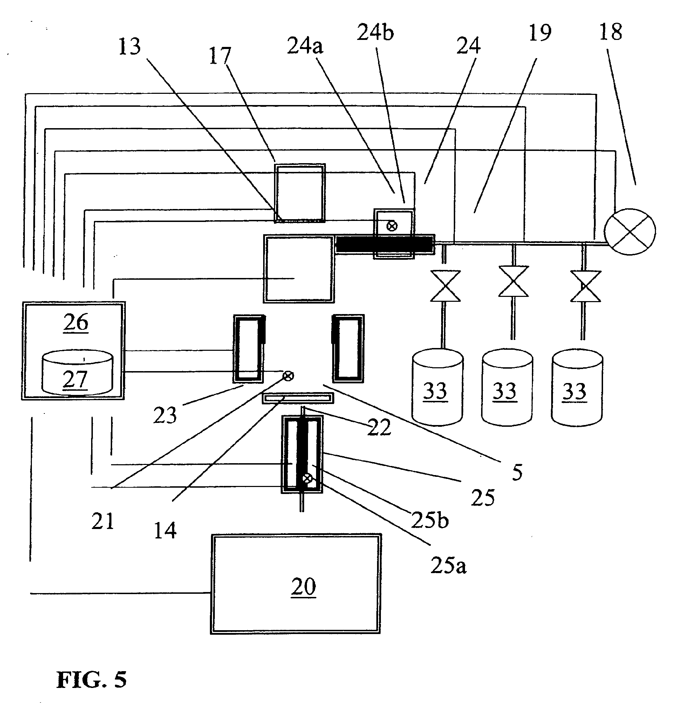

Figure 5 shows the arrangement of the device shown in the preceding figures, together with other elements making up an automatic testing device in accordance with a possible embodiment.

In this embodiment, the fluids that it is wished to cause to react are contained in separate reaction reservoirs 33 linked to supply means consisting of a supply pump 18 with adjustable flow and a supply conduit 19 connected to the common inlet of the inlet chamber. Inserted between each reservoir 33 and the conduit 19 is a line valve, while provided before the common inlet to the inlet chamber is the conditioning system 24 for the supply 24 which, in the case that is illustrated, consists of a second temperature sensor 24a and a second heating element 24b.

From the conditioning system, the supply enters the inlet chamber 13, it traverses the reaction block 5 which is provided with the first temperature regulation system composed of the first heating element 23 and the first temperature sensor 21, via the reaction chamber whose inlet conduit is open due to the corresponding rod having been withdrawn by the actuator 17, as described earlier, and, on leaving the common collection chamber 14, it is led by the sample collection system 22 consisting of the conduit 22 towards the means of analysis 20. The conduit 22 is provided with a third temperature regulation system 25 comprising a third temperature sensor 25a and a third heating element 25b.

It can furthermore be seen that the supply pump 18, the valves for the supply reservoirs 33, the heating elements 23, 24b and 25b, the temperature sensors 24a, 21 and 25a and the means of analysis are connected to the main control system 26 which includes the computing system 26 for management and handling of experimental data, in such a way that the flows and the temperatures of the supply can be regulated in the manner described earlier.

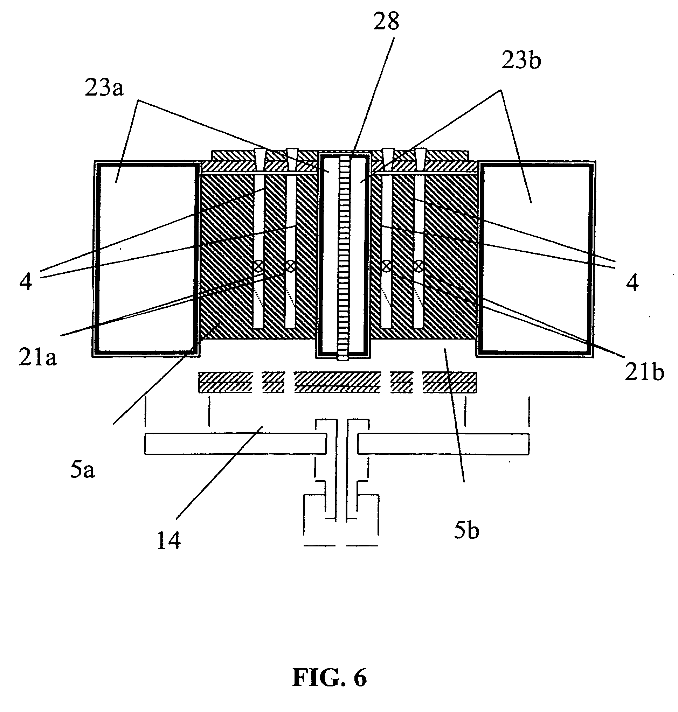

Figure 6 shows an alternative embodiment of the reaction block to that shown in figure 4. So, according to that shown in figure 6, the reaction block consists of a first body 5a and a second body 5b in which the respective reaction chambers 4 are located. The first body is provided with a first heating element 23a and with first temperature sensors 21a, while the second body is provided with a first heating element 23b and with first temperature sensors 21b. The bodies 5a, 5b and their respective heating elements 23a, 23b are separated from each other by a thermal insulation element 28, in such a way that each body can be individually heated to a desired temperature as described earlier.

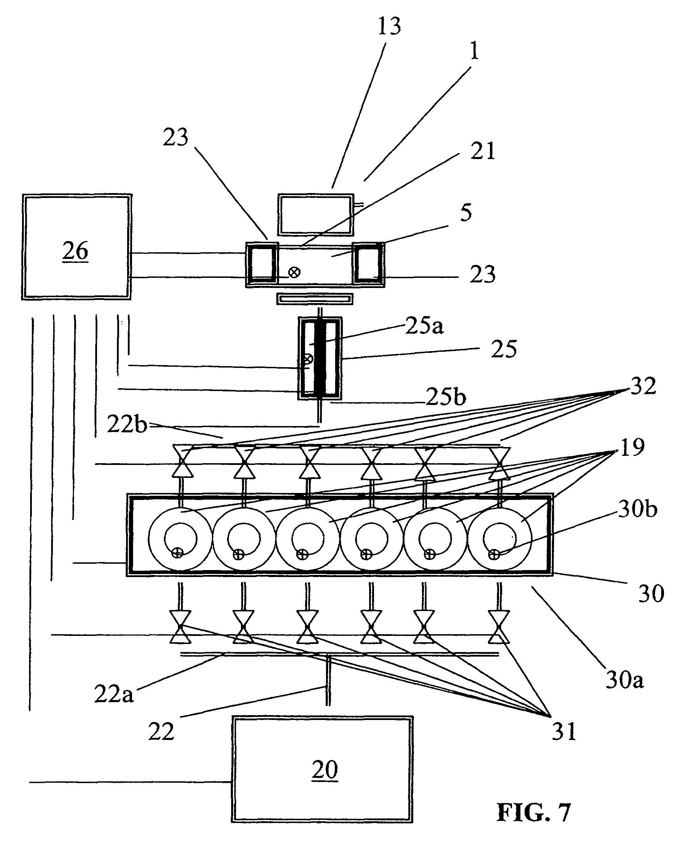

Figure 7 shows an alternative embodiment of the sample collection system, according to which the collection system for collecting individual samples of fluid exiting from each reaction chamber comprises a plurality of loops 19 with calibrated volumes, a fourth temperature regulation system 30 with at least four heating means 30a and four temperature sensors 30b, in order to maintain the individual samples in the loops 19 at a defined temperature until their later analysis in the means of analysis 20 is carried out, a system of switching valves 31, 32 for individually introducing, maintaining and emptying each individual sample in each loop 19 and first connections 22a for connecting each loop to the analysis system 20 and second connections 22b for connecting each loop 19 to the sample-taking system 22. In addition to the elements described in relation to figure 5, in this alternative embodiment, the valves 31, 32 and the fourth temperature regulation system 30 are connected to the main control system 26, in order to thereby permit the operations also described earlier in this present specification. Although figure 7 shows a system of individual inlet and outlet valves, the system of switching valves can also consist of one or more multi-gate valves conventional in themselves.

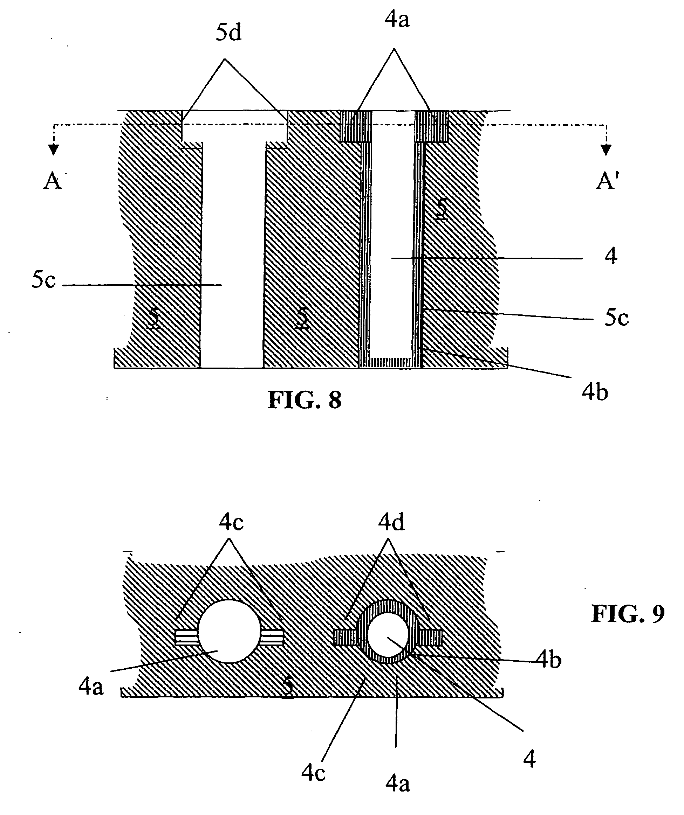

Figures 8 and 9 show an alternative construction of the reaction chambers. So, a removable reaction chamber 4a can be seen with perimetric positioning tabs 4b at one of its ends, which respectively fit into securing projections 5d and into a housing hole 5c in the reaction block 5. This alternative construction permits the individualized insertion and withdrawal of the removable reaction chambers 4a, which is of particular use when the samples of the solid material are prepared remotely or when a reaction chamber has suffered damage and has to be replaced.

## Claims

1. A device for multiple catalytic tests on catalysts with
- a plurality of reaction chambers (4, 4a) arranged in at least one reaction block (5), where each reaction chamber (4, 4a) is able to house at least one solid material, and has a fluid inlet conduit (2) and a fluid outlet conduit (15),
- means of fluid supply (18, 19, 33) for effecting a regulated dosing of flows of at least one fluid via said fluid inlet conduit (2) for each reaction chamber (4, 4a),
- a switching system (11) of fluids comprising a plurality of flow control systems, with each flow control system for the passage of fluids being applied to at least one access mouth (16) selected from the access mouth of the inlet conduit (2) and the access mouth of the outlet conduit (15) of each reaction chamber (4, 4a),
**characterized in that** each flow control system comprises a rod (3) with an end coupled in the access mouth (16), the rod (3) being individually displaceable between a closed position and an open position, where, in the closed position, the contact between the end of the rod (3) and the access mouth (16) is such that the rod hermetically seals the passage of fluid to or from the conduit (2, 15) on which the rod (3) is seated in the closed position.

2. A device according to claim 1, **characterized in that** at least one surface selected from the surface of said end of the rod (3) and the surface of the access mouth (16) in which the rod (3) is seated in the closed position is configured in such a way that the displacement of the rod (3) between the closed and open position permits the flow of fluid in the conduit (2, 15) to be regulated.

3. A device according to any of claims 1 and 2, **characterized in that** each rod (3) is connected to at least one actuator (17) selected from mechanical, electromechanical, pneumatic, electric, magnetic, electromagnetic actuators and combinations thereof, the actuation of which displaces the rod (3) between said closed position and said open position.

4. A device according to any of claims 1, 2 and 3, **characterized in that** the rod (3) is hollow in order to permit the passage of fluids through its interior.

5. A device in accordance with any of claims 1 to 3, **characterized in that** said end of the rod (3) has a conical tip.

6. A device according to claim 1, **characterized in that** it also comprises means of analysis (20) for analysing the fluid exiting from the outlet conduits of the reaction chambers, selected from systems of gas chromatography, mass spectrometry, visible spectrometry, ultraviolet spectrometry and infrared spectrometry and combinations thereof, connected to each fluid outlet (15, 10).

7. A device according to any of claims 1 and 2, **characterized in that** it comprises at least one temperature sensor (21) in at least one of the reaction chambers (4, 4a).

8. A device according to claim 1, **characterized in that** the means of fluid supply (18, 19, 33) connected to the inlet conduits (2) of the reactions chambers (4, 4a) are selected from mass flow regulating systems based on changes of temperature differences of the fluid, systems based on capillaries, systems of calibrated holes and combinations thereof.

9. A device according to claims 1 and 8, **characterized in that** the means of fluid supply (18, 19, 33) are means of liquid supply and are selected from mass flow regulating systems based on changes of temperature differences of the liquid, piston pumps and combinations thereof.

10. A device according to claim 9, **characterized in that** it furthermore comprises a sample-taking system (22) which leads outgoing fluid from the fluid outlet (15) of each reaction chamber (4, 4a) to the means of analysis (20).

11. A device according to claim 1, **characterized in that** it furthermore comprises a first temperature regulation system (6, 21, 21a, 21b, 23, 23a, 23b) capable of maintaining a temperature between -80°C and 700°C in each reaction block (5), and which comprises a plurality of first temperature sensors (21, 21a, 21b) and at least one first heating element (6, 23, 23a, 23b).

12. A device according to any of claims 1 and 11, **characterized in that** at least one reaction block (5) consists of at least two bodies (5a, 5b) thermally insulated from each other, each body (5a, 5b) containing at least one reaction chamber (4, 4a), each body (5a, 5b) being provided with at least one of the first temperature sensors (21a, 21b) and at least one of the first heating elements (23a, 23b), and **in that** the first temperature regulation system (6) is designed for individually regulating the temperature in each body (5a, 5b) of the reaction block (5).

13. A device according to claim 1, **characterized in that** it furthermore comprises
a fluid conditioning system (24, 24b) comprising conditioning means selected from means of mixing, means of heating, means of cooling, means of vaporization and combinations thereof, in order to condition the fluids prior to their being supplied to each reaction chamber and
a second temperature regulation system capable of maintaining a temperature between -80°C and 450°C in said conditioning system, and which comprises at least one second temperature sensor (24a) and at least one second heating element (24b).

14. A device according to claim 1 or 6, **characterized in that** it furthermore comprises a third temperature regulation system (30) arranged between the reaction block (5) and the means of analysis (20) capable of maintaining the outgoing fluid at temperatures between 25°C and 250°C in any path of the fluid between the reaction block (5) and the means of analysis (20), and which comprises at least a third temperature sensor (25a) and at least a third heating element (25b).

15. The device according to claim 1, **characterized in that** the reaction chambers (4, 4a) and the flow control means withstand pressures from 0.1 absolute atmospheres to 100 absolute atmospheres, preferably between 1.0 and 5 absolute atmospheres.

16. A device according to any of claims 6 and 14, in which the means of analysis (20) consist of a system of ultra-fast gas chromatography, with a column of multiple capillaries in parallel or multi-capillary columns, which permit fast separation of the different chemical compounds making up the outgoing fluid from each reaction chamber.

17. A device according to claim 10, **characterized in that** it furthermore comprises a collection system (22) for collecting individual samples of the fluids exiting from each reaction chamber (4, 4a) comprising
a plurality of loops (19) with calibrated volumes,
a fourth temperature regulation system (30) with at least a fourth heating means (30a) for maintaining the individual samples in the loops (19) at a defined temperature until their later analysis has been performed,
a system of switching valves (31, 32) for individually introducing, maintaining and emptying each individual sample in each loop (19), and
first connections (22a) for connecting each loop (19) to the analysis system (20) and second connections (22b) for connecting each loop (19) to the sample-taking system (22).

18. A device according to claim 10, **characterized in that** it furthermore comprises an automated system for the collection of samples from each of the reaction chambers (4, 4a), comprising a mobile arm designed for selectively penetrating each of the reaction chambers (4, 4a), taking a direct sample of reaction products present in the reaction chambers (4, 4a) and transferring the sample directly to the means of analysis (20).

19. A device according to claim 1, **characterized in that** the reaction chambers (4a) are removable and individually housed in separate holes (5c) of the reaction block (5).

20. A device in accordance with any of claims 1, 11, 12, 14 and 19, **characterized in that** at least one of the reaction blocks (5) is fitted in a movable way so that it can be extracted from the device.

21. A device according to any of claims 1 to 20, **characterized in that** it furthermore comprises a main control system (26) for controlling at least part of the means and elements involved in a catalytic test process and in the analysis of the reaction products.

22. A device according to any of the preceding claims 1 to 21, **characterized in that** it furthermore comprises a computing system (27) for managing and handling experimental data.

23. A device according to claim 22, **characterized in that** the experimental data managed and handled by the computing system (27) is selected from at least temperatures, fluid flows, analytical results, reaction times and combinations thereof.

24. A device according to claim 1, **characterized in that** it comprises
a common inlet (1) for fluids to which the fluids provided by the supply means (18, 19, 33) have access, and
an inlet chamber (13) inserted between the fluid inlet (1) and the inlet conduits (2) of the reaction chambers (4, 4a), and to where the access mouths (16) of those inlet conduits (2) lead.

25. A device according to claim 1, **characterized in that** it comprises
a common outlet (10) for fluids in order to discharge the fluids from the reaction chambers (4, 4a), and
a common collection chamber (14) inserted between the outlet conduits (15) of the reaction chambers (4, 4a) and said common outlet (10), and to where the access mouths of those inlet conduits (15) lead.

26. A flow control system for multiple tests on solid materials with a fluid flow switching system by means of a plurality of conduits, **characterized in that** coupled at the access mouth (16) of each conduit (2, 15) is coupled the end of a rod (3), individually displaceable between a closed position and an open position, where, in the closed position, the contact between the end of the rod (3) and the access mouth (16) of the conduit (2, 15) is such that the rod (3) hermetically seals the passage of fluid to or from the conduit (2, 15) on which the rod (3) is seated in the closed position.

27. A system according to claim 26, **characterized in that** said end of the rod (3) has a conical tip.

28. A system according to claim 26 or 27, **characterized in that** at least one surface selected from the surface of said end of the rod (3) and the surface of the access mouth (16) of the conduit in which the rod (3) is seated in the closed position is configured in such a way that the displacement of the rod (3) between the closed and open position permits the flow of fluid in the conduit (2, 15) to be regulated.

29. A system according to claims 26, 27 and 28, **characterized in that** each rod (3) is connected to at least one actuator (17) selected from mechanical, electromechanical, pneumatic, electric, magnetic, electromagnetic actuators and combinations thereof, the actuation of which displaces the rod (3) between said closed position and said open position.

30. A system according to any of claims 26, 27, 28 and 29, **characterized in that** the rod (3) is hollow in order to permit the passage of fluids through its interior.
